Europäisches Patentamt

European Patent Office

Office européen des brevets

(19)

(11) **EP 0 545 054 B1**

(12) **EUROPÄISCHE PATENTSCHRIFT**

(45) Veröffentlichungstag und Bekanntmachung des Hinweises auf die Patenterteilung:
**12.03.1997 Patentblatt 1997/11**

(51) Int. Cl.$^6$: **B62D 7/15**

(21) Anmeldenummer: **92117987.5**

(22) Anmeldetag: **21.10.1992**

(54) **Nicht spurgebundenes Fahrzeug mit willkürlich lenkbaren Vorderrädern und selbsttätig arbeitender Hinterradzusatzlenkung**

Vehicle, not track bound, with arbitrarily steerable front wheels and self actuating additional rear wheel steering

Véhicule non lié à une voie de roulement avec des roues avant dirigeables à volonté et direction additionnelle travaillant en indépendance sur les roues arrières

(84) Benannte Vertragsstaaten:
**ES FR GB IT SE**

(30) Priorität: **05.12.1991 DE 4140124**

(43) Veröffentlichungstag der Anmeldung:
**09.06.1993 Patentblatt 1993/23**

(73) Patentinhaber: **MERCEDES-BENZ AG**
**70327 Stuttgart (DE)**

(72) Erfinder:
• **Monn, Albrecht, Dipl.-Math. (FH)**
**W-7000 Stuttgart 31 (DE)**
• **Götz, Jürgen, Dipl.-Ing.**
**W-7073 Lorch (DE)**
• **Horwath, Jochen, Dipl.-Ing.**
**W-7441 Unterensingen (DE)**
• **Pflug, Hans-Christian, Dr.-Ing.**
**W-7064 Remshalden - 3 (DE)**
• **Wüst, Klaus, Dipl.-Ing.**
**W-7016 Gerlingen (DE)**

(56) Entgegenhaltungen:
DE-A- 3 622 072          DE-A- 3 929 994

• PATENT ABSTRACTS OF JAPAN vol. 16, no. 10 (M-1199)13. Januar 1992 & JP-A-03 231 068 (NISSAN MOTOR CO LTD) 15. Oktober 1991

**Beschreibung**

Die Erfindung betrifft ein nicht spurgebundenes Fahrzeug mit willkürlich lenkbaren Vorderrädern und selbsttätig arbeitender bzw. auf selbsttätigen Betrieb umschaltbarer Hinterradzusatzlenkung, mit der der Lenkwinkel der Hinterräder in Abhängigkeit vom Vorderradlenkwinkel sowie von weiteren Parametern, z.B. Fahrgeschwindigkeit und zurückgelegte Wegstrecke, derart steuerbar bzw. regelbar ist, daß - bei angenähert schräglauffreier Fahrt - ein äußerer Eckbereich bzw. Punkt am Fahrzeugheck angenähert die gleiche Bahnkurve durchläuft wie ein analoger äußerer Eckbereich bzw. Punkt am Fahrzeugbug.

Ein Fahrzeug mit entsprechender Lenkung ist Gegenstand der DE 36 22 072 A1, vgl. dort insbesondere den Anspruch 1.

Durch die angegebenen Merkmale kann auch bei Fahrzeugen mit sehr großem Heiküberhang ein Ausschwenken des Hecks vermieden und sichergestellt werden, daß Kollisionen des Fahrzeuges mit längsseits desselben befindlichen Hindernissen vermieden werden.

Aus der GB 21 51 997 A ist es bekannt, mittels einer Hinterradzusatzlenkung die Hinterräder bei höherer Fahrgeschwindigkeit gleichsinnig zu den Vorderrädern, jedoch mit gegenüber den Vorderrädern verminderten Lenkwinkeln, auszulenken. Dadurch soll die Handhabung des Fahrzeuges bei schneller Kurvenfahrt verbessert werden. Insbesondere lassen sich Ausweichmanöver bei höherer Geschwindigkeit leichter durchführen, etwa wenn einem plötzlich auftauchenden Hindernis ausgewichen werden muß.

Bei langsamer Fahrgeschwindigkeit in Vorwärtsrichtung ist gemäß der GB 21 51 997 A vorgesehen, zur Erhöhung der Wendigkeit des Fahrzeuges die Hinterräder gegensinnig zu den Vorderrädern auszulenken. Dies bringt jedoch den Nachteil mit sich, daß das Fahrzeugheck bei einer starken Änderung des Lenkwinkels der Vorderräder unerwünscht weit zur Kurvenaußenseite hin ausschwenkt. Dieser Effekt macht sich beispielsweise dann besonders störend bemerkbar, wenn ein Fahrzeug zunächst in Geradeausfahrt durch ein enges Tor od.dgl. hindurchfährt und die Lenkung im Sinne einer Kurvenfahrt betätigt wird, sobald das Fahrzeugvorderteil durch das Tor hindurchgekommen ist. Bei einem solchen Manöver kann das Fahrzeugheck gegen den kurvenaußenseitigen Torpfosten stoßen.

Aus der DE 39 29 994 A1 ist es bekannt, die Hinterradlenkung derart zu steuern, daß sich bei Kurvenfahrt trotz eines sehr langen Radstandes des Fahrzeuges ein ähnliches Lenkverhalten ergibt, wie es ein Fahrzeug mit gleicher Gesamtlänge und vergleichsweise kurzem Radstand aufweist. Damit läßt sich zwar das Fahrzeug oftmals leichter rangieren, gleichzeitig wird durch den langen Radstand die Fahrstabilität bei hoher Geschwindigkeit erhöht. Jedoch kann ein solches Lenkverhalten problematisch werden, weil im Ergebnis immer eine zu den Vorderrädern gegensinnige Auslenkung der Hinterräder auftritt, so daß sich die vorangehend anhand der GB 21 51 997 A erläuterten Schwierigkeiten ergeben können.

Der DE 35 06 048 C1 läßt sich entnehmen, die Hinterradzusatzlenkung derart zu steuern, daß die Differenz zwischen dem Istwert des Hinterradlenkwinkels und dem entsprechenden Sollwert in Abhängigkeit vom zurückgelegten Fahrzeugweg verringert wird. Dadurch soll bei Fahrzuständen, bei denen Vorderräder und Hinterräder gegensinnig zueinander ausgelenkt werden, vermieden werden, daß das Fahrzeugheck relativ zu der von den Vorderrädern durchlaufenen Bahn zu Beginn einer Kurvenfahrt vorzeitig zur Kurvenaußenseite hin auswandert.

Aufgabe der Erfindung ist es nun, bei Fahrzeugen mit dem eingangs angegebenen Lenkkonzept eine weitere Verbesserung zu erreichen und insbesondere bei hoher Manövrierfähigkeit eine besonders leichte Handhabung bei gleichzeitig besonders wenig gewöhnungsbedürftigem Fahrverhalten zu bieten.

Diese Aufgabe wird erfindungsgemäß dadurch gelöst, daß zumindest in einem unteren Bereich der Fahrgeschwindigkeit die Hinterradlenkwinkel auf einen Stellbereich begenzt sind, dessen Grenzen sich in Abhängigkeit vom Vorderradlenkwinkel ändern, derart, daß mit zunehmender Abweichung des Vorderradlenkwinkels von der Geradeausstellung ein zunehmender Stellbereich der Hinterradlenkwinkel beiderseits der Geradeausstellung und bei Geradeausstellung der Vorderräder nur eine Geradeausstellung der Hinterräder ermöglicht werden.

Die Erfindung beruht auf dem allgemeinen Gedanken, für die Steuerung der Hinterräder einen maximalen Stellbereich vorzugeben, dessen betragsmäßige Grenzen durch den jeweils vom Fahrer eingestellten Vorderradlenkwinkel und einen damit multiplikativ verknüpften Faktor vorgegeben werden, der ggf. geschwindigkeitsabhängig variiert werden kann. Auf diese Weise wird gewährleistet, daß der mögliche Stellbereich für die Hinterradlenkung mit geringer werdenden Lenkwinkeln der Vorderräder eingeschränkt wird und die Hinterräder immer in Geradeausstellung gebracht werden, wenn auch die Vorderräder ihre Geradeausstellung einnehmen.

Damit wird einerseits die Sicherheit der Rechnersteuerung für die Hinterradlenkung erhöht, weil auf diese Weise in der Praxis eine Akkumulation kleiner Rechenfehler über längere Zeit ausgeschlossen wird. Denn bei Geradeausstellung der Vorderräder stehen die Hinterräder in jedem Falle in Geradeausrichtung. Andererseits wird am Kurvenausgang - d.h. wenn die Vorderräder wieder in Geradeausstellung gebracht werden - ohne größeren rechnerischen Aufwand ein besonders übersichtliches Lenkverhalten des Fahrzeuges gewährleistet. Denn es wird vermieden, daß das Fahrzeugheck vor Beginn der Geradeausfahrt im Übergangsbereich zwischen Kurven- und Geradeausfahrt zunächst noch zur Kurvenaußenseite hin auszuscheren vermag, obwohl der Fahrer die Vorderradlenkung wieder - zumindest nahezu - in Geradeausstellung gebracht hat.

Gemäß einer bevorzugten Ausführungsform der Erfindung ist das beschriebene Lenkverhalten nur bei langsamen Fahrgeschwindigkeiten unterhalb eines Geschwindigkeitsschwellwertes $v_1$ vorgesehen, bei dem noch praktisch keine Schräglaufwinkel bei Kurvenfahrt auftreten. Innerhalb eines Übergangsbereiches der Geschwindigkeiten zwischen dem genannten ersten Schwellwert $v_1$ und einem größeren Schwellwert $v_2$ wird dann das Lenkverhalten des Fahrzeuges mehr und mehr dem Lenkverhalten eines Fahrzeuges ohne Hinterradlenkung angenähert. Dazu kann anstelle des Hinterradlenkwinkels, welcher bei Fahrgeschwindigkeiten unterhalb des ersten Schwellwertes $v_1$ eingestellt würde, jeweils ein um einen Faktor multiplikativ veränderter Lenkwinkel eingestellt werden, wobei der genannte Faktor bei einer Fahrgeschwindigkeit $v_1$ den Wert 1, bei einer Fahrgeschwindigkeit $v_2$ den Wert 0 und zwischen diesen Geschwindigkeiten einen mit zunehmender Geschwindigkeit kontinuierlich absinkenden Wert hat.

Oberhalb einer Fahrgeschwindigkeit von $v_2$ kann ggf. in grundsätzlich bekannter Weise vorgesehen sein, zur Erhöhung der Fahrstabilität die Hinterräder jeweils gleichsinnig zu den Vorderrädern, jedoch mit gegenüber den Vorderrädern verminderten Lenkwinkeln auszulenken.

Für eine Rückwärtsfahrt ist es vorteilhaft, wenn die Hinterradlenkung die Hinterräder entweder ständig in Geradeausstellung hält oder die Hinterräder jeweils gegensinnig zu den Vorderrädern einschlägt.

Um nun zu vermeiden, daß bei einem Fahrtrichtungswechsel während eines Rangiermanövers od.dgl. ein für den Fahrer überraschender Wechsel des Lenkverhaltens auftritt, weil die Hinterräder bei Rückwärts- und Vorwärtsfahrt nach anderen Vorgaben gesteuert werden, kann gemäß einer zweckmäßigen Ausgestaltung der Erfindung vorgesehen sein, daß bei einem Fahrtrichtungswechsel von Rückwärts- auf Vorwärtsfahrt die Hinterräder bei der Vorwärtsfahrt zunächst in gleicher Weise wie bei Rückwärtsfahrt gesteuert werden bzw. in Geradeausstellung bleiben, bis der Fahrer die Lenkung erstmals in Geradeausstellung gebracht hat. Danach erfolgt bei weiterer Vorwärtsfahrt die zuvor erläuterte Steuerung der Hinterräder. Auf diese Weise wird gewährleistet, daß ein Fahrzeug, welches in Rückwärtsfahrt in einen beengten Raum hineingefahren ist, auf praktisch gleichem Wege wieder herausfahren kann.

Im übrigen wird hinsichtlich bevorzugter Merkmale der Erfindung auf die Ansprüche sowie die nachfolgende Erläuterung einer vorteilhaften Ausführungsform verwiesen, die in der Zeichnung dargestellt ist.

Dabei zeigt

Fig. 1      eine schematisierte Draufsicht auf ein Fahrzeug mit erfindungsgemäßer Zusatzlenkung der Hinterräder und

Fig. 2      ein Wendemanöver eines derartigen Fahrzeuges, wobei zeitlich aufeinanderfolgende Lagen des Fahrzeuges in Draufsicht dargestellt sind; einige charakteristische Lagen des Fahrzeuges am Kurveneingang und -ausgang sind durch verdickte Linien hervorgehoben.

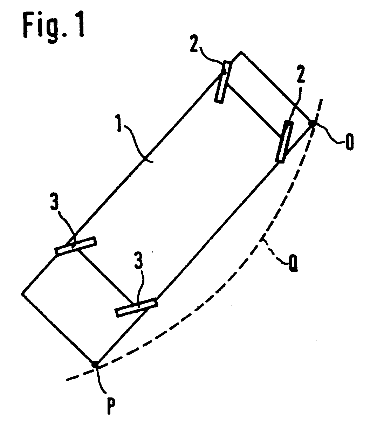

Das in Fig. 1 schematisiert in Draufsicht dargestellte Fahrzeug 1 besitzt vom Fahrer willkürlich gelenkte Vorderräder 2 sowie mit einer Zusatzlenkung ausgerüstete Hinterräder 3, deren Steuerung mittels eines nicht dargestellten Rechners erfolgt, derart, daß zumindest bei langsamer Vorwärtsfahrt, wenn die Fahrzeugräder praktisch ohne Schräglaufwinkel rollen, ein äußerer Eckbereich bzw. Punkt E am Fahrzeugheck der von einem analogen äußeren Bereich bzw. Punkt U am Fahrzeugbug durchlaufenen Bahnkurve Q folgt.

Um dies bei schräglauffreier Fahrt, bzw. bei sehr langsamer Fahrgeschwindigkeit unterhalb eines ersten Schwellwertes $v_1$ der Geschwindigkeit, zu erreichen, kann der Lenkeinschlag der Hinterräder wie folgt bestimmt werden:

$$\delta_{HS1} = A_C \delta_{Vm}(E) + E_C \delta_{Vm}(A) + F_C \delta_{Hm}(A) - B_C \sum_{i=A}^{E} \frac{\delta_{Vm}(i) - \delta_{Hm}(i)}{l} \Delta x(i)$$

Hierbei ist $\delta_{HS1}$ derjenige mittlere Hinterradlenkwinkel, welcher bei schräglauffreier bzw. entsprechend langsamer Fahrt im Geschwindigkeitsbereich unterhalb des ersten Geschwindigkeitsschwellwertes $v_1$ notwendig ist und eingestellt wird, um zu gewährleisten, daß der Punkt P am Fahrzeugheck der Bahnkurve Q des Punktes O am Fahrzeugbug folgt.

Die Größen $\delta_{Hm}$ und $\delta_{Vm}$ sind mittlere Lenkwinkel zwischen linkem und rechtem Hinter- bzw. Vorderrad; die tatsächlich an den linken und rechten Fahrzeugseiten eingestellten Winkel ergeben sich aus der Lenkgeometrie des Fahrzeuges.

Die Konstanten $A_C$, $B_C$, $E_C$ und $F_C$ berücksichtigen die Abmessungen des Fahrzeuges. Dabei ist $A_C$ der Quotient aus dem Maß des Hecküberhanges sowie dem Abstand zwischen Heckseite des Fahrzeuges und Vorderachse, $B_C$ der Quotient aus dem Maß des Radstandes sowie dem Abstand zwischen Heckseite des Fahrzeuges und Vorderachse, $E_C$ der Quotient aus dem Abstand zwischen Fahrzeugvorderseite und Hinterachse sowie dem Abstand zwischen Heckseite des Fahrzeuges und Vorderachse, $F_C$ der Quotient zwischen dem Maß des Frontüberhanges und dem Abstand zwischen Heckseite des Fahrzeuges und Vorderachse.

Die Indizes E und A bezeichnen einerseits den aktuellen Zeitpunkt (E) und andererseits einen vergangenen Zeitpunkt (A), wobei die Differenz E - A der Zeit entspricht, in der das Fahrzeug eine der Fahrzeuglänge entsprechende Wegstrecke zurückgelegt hat. Die Summer der in diesem Zeitraum abgespeicherten Wegstücke $\Delta$x(i) entspricht der Fahrzeuglänge.

Sobald die Fahrgeschwindigkeit den ersten Schwellwert $v_1$ überschreitet, aber noch innerhalb eines Geschwindigkeitsbereiches zwischen dem ersten Schwellwert $v_1$ und einem weiteren größeren Schwellwert $v_2$ liegt, kann der oben angegebene Wert für den Hinterradlenkwinkel zur Berücksichtigung der bei höherer Fahrgeschwindigkeit auftretenden Schräglaufwinkel der Räder um einen Faktor $k_{1(v)}$ verändert werden, beispielsweise gemäß der folgenden Gleichung:

$$\frac{\delta_{HS2}}{\delta_{HS1}} = k_{1(v)} = \frac{1}{2} \cdot [1 + \cos(\pi \frac{v - v_1}{v_2 - v_1})]$$

Dabei ist $\delta_{HS2}$ der im Geschwindigkeitsbereich zwischen den Schwellwerten $v_1$ und $v_2$ tatsächlich eingestellte mittlere Lenkwinkel der Hinterräder.

Wird der Hinterradlenkwinkel im Geschwindigkeitsbereich zwischen $v_1$ und $v_2$ gemäß dieser Gleichung eingestellt, so bleiben die Hinterräder bei der Fahrgeschwindigkeit $v_2$ dauernd in Geradeausstellung; darüber hinaus werden die für die Hinterräder einstellbaren Lenkwinkel gegenüber den bei sehr langsamer schräglauffreier Fahrt (unterhalb der Geschwindigkeit $v_1$) einzustellenden Lenkwinkeln zunehmend vermindert, so daß das Lenkverhalten des Fahrzeuges mit zunehmender Geschwindigkeit zunehmend an ein Fahrzeug ohne Hinterradlenkung angenähert wird.

Sobald die Fahrgeschwindigkeit den weiteren Schwellwert $v_2$ überschreitet, kann die Hinterradlenkung in grundsätzlich bekannter Weise entweder dauernd in Geradeausstellung bleiben oder zur Erhöhung der Fahrstabilität bei plötzlichen Ausweichmanövern jeweils eine zu den Vorderrädern gleichgerichtete Auslenkung der Hinterräder, jedoch mit verminderten Lenkwinkeln, bewirken. Grundsätzlich können in diesem Geschwindigkeitsbereich zur Steuerung der Hinterradlenkung auch weitere Parameter, wie Seitenwindeinflüsse bzw. Querbeschleunigung od.dgl., herangezogen werden.

Um einerseits die Sicherheit des erfindungsgemäßen Systems zu erhöhen und andererseits zu gewährleisen, daß die Hinterräder - insbesondere im Geschwindigkeitsbereich unterhalb des weiteren Geschwindigkeitsgrenzwertes $v_2$ - in Geradeausstellung gebracht werden, sobald der Fahrer die Vorderräder auf Geradeausfahrt einstellt, ist zweckmäßigerweise vorgesehen, für die einstellbaren Hinterradlenkwinkel jeweils einen Stellbereich vorzugeben, derart, daß der Absolutwert des Lenkwinkels der Hinterräder unterhalb eines Grenzwertes bleibt, der seinerseits proportional zum Lenkwinkel der Vorderräder ist, wobei sich der Proportionalitätsfaktor mit der Fahrgeschwindigkeit und/oder auch in Abhängigkeit von anderen Parametern ändern kann. In jedem Falle ergibt sich dann aufgrund der multiplikativen Verknüpfung zwischen dem Vorderradlenkwinkel und dem Proportionalitätsfaktor der Stellbereich 0, d.h. die Hinterräder gehen in Geradeausstellung, wenn der Lenkwinkel der Vorderräder den Wert 0 hat.

Auf diese Weise wird bei Kurvenfahrt am Kurvenausgang ohne größere rechnerische Operationen gewährleistet, daß die Hinterräder simultan mit den Vorderrädern in die Geradeausstellung übergehen und das Fahrzeugheck mit Geradeausstellung der Vorderräder auf einer geradlinigen Bahn geführt wird. Dies ist gleichbedeutend damit, daß ein äußerer Eckbereich bzw. Punkt am Fahrzeugheck nicht mehr vollständig die Bogenbahn durchläuft, die zuvor - vor Einstellung der Vorderräder auf Geradeausfahrt - von einem analogen vorderen Eckbereich bzw. Punkt am Fahrzeugbug durchlaufen wurde.

Dieses Steuerverhalten ermöglicht des weiteren, daß mit dem Zeitpunkt der Geradeausstellung der Vorderräder die zuvor vom Fahrzeugbug durchlaufene Bahn bei der Steuerung der Hinterräder unbeachtlich wird, d.h. die entsprechenden Daten können vom Rechner "vergessen" bzw. ohne weiteres aus dem entsprechenden Speicher des Rechners ausgeschoben bzw. getilgt werden.

Dadurch ergibt sich der Vorteil, daß in der Vergangenheit aufgetretene Rechenfehler nicht akkumuliert werden und zu Fehleinstellungen der Hinterräder führen können. Denn nach einer Geradeausstellung der Vorderräder beginnt die rechnerische Ermittlung und Einstellung der Hinterradlenkwinkel beim Einschlagen der Vorderräder jeweils erneut mit wohldefinierten Ausgangswerten, nämlich den Lenkwinkeln 0 für die Vorder- sowie die Hinterräder.

Wird das Fahrzeug nach einem Stillstand gestartet und in Vorwärtsrichtung bewegt, arbeitet die Hinterradlenkung zweckmäßigerweise so, als ob das Fahrzeug die im Stillstand eingenommene Position durch eine Geradeausfahrt erreicht hätte. Der Rechner "merkt" sich also bei stillgesetztem Fahrzeug nicht, in welcher Weise die Halteposition des Fahrzeuges angefahren wurde. Auf diese Weise wird gewährleistet, daß das Fahrzeugheck beim Anfahren des Fahrzeuges in Vorwärtsrichtung zunächst auf geradlinigem Wege bis zu der Position geführt wird, die im Stillstand vom Fahrzeugbug eingenommen wurde. Dagegen durchläuft das Fahrzeugheck nicht den gegebenenfalls bogenförmigen Restweg, auf dem der Fahrzeugbug vor Stillstand des Fahrzeuges seine Stillstandsposition erreicht hat.

Durch diese Steuerungsweise wird der Bedarf an Rechner- bzw. Speicherkapazität für die Steuerung der Hinterräder vermindert. Gleichzeitig wird ein für den Fahrer überraschendes Lenkverhalten vermieden.

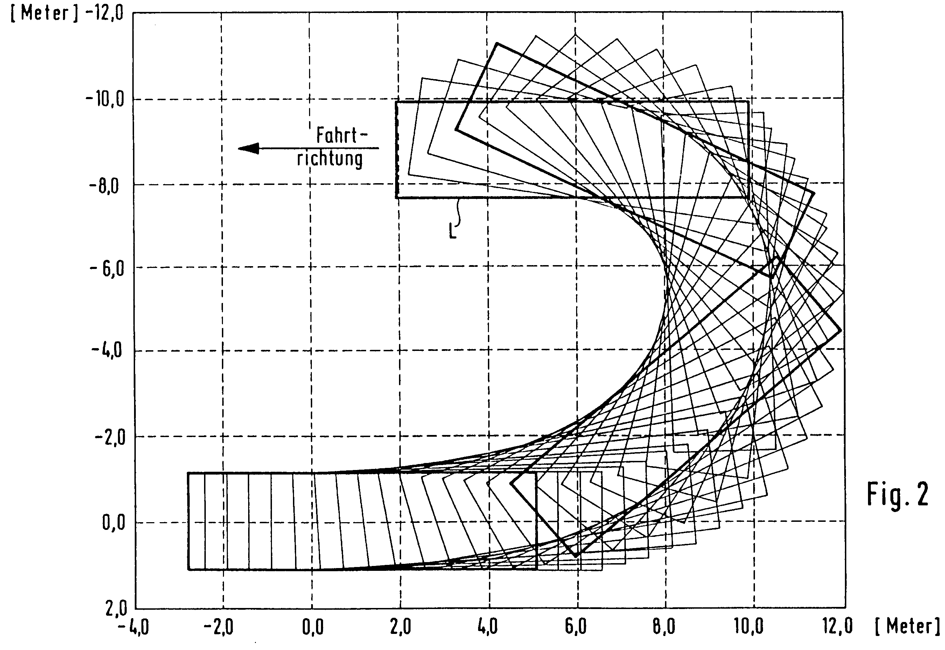

Die Fig. 2 zeigt nun zeitlich aufeinanderfolgende Lagen eines in Draufsicht dargestellten Fahrzeuges bei einem Wendemanöver. Man erkennt, daß das Fahrzeugheck an keiner Stelle zur Kurvenaußenseite hin über eine zuvor vom Fahrzeugvorderteil bzw. -bug eingenommene Lage ausschert. Vielmehr durchläuft die kurvenäußere Ecke des Fahrzeughecks - mit Ausnahme des Bereiches am Kurvenausgang - nahezu die gleiche Bahnkurve wie der analoge Eckpunkt am Fahrzeugbug. Am Kurvenausgang des Wendebogens macht sich die Begrenzung des Stellbereiches für den Hinterradlenkwinkel durch einen Stellbereich mit vom Vorderradlenkwinkel abhängigen Grenzen bemerkbar: Wenn die Vorderräder in der Lage L des Fahrzeuges am Ende des Wendemanövers in Geradeausstellung zurückgestellt werden, werden auch die Hinterräder in die Geradeausstellung gebracht, so daß der kurvenäußere Eckpunkt des Fahrzeughecks sich nunmehr entsprechend der Fahrtrichtung in Geradeausrichtung bewegt und nicht mehr die noch zuvor von der vorderen kurvenaußenseitigen Fahrzeugecke durchlaufene Restbogenbahn durchläuft.

**Patentansprüche**

1. Nicht spurgebundenes Fahrzeug (1) mit willkürlich lenkbaren Vorderrädern (2) und selbsttätig arbeitender bzw. auf selbsttätigen Betrieb umschaltbarer Hinterradzusatzlenkung, mit der der Lenkwinkel der Hinterräder (3) in Abhängigkeit vom Vorderradlenkwinkel sowie von weiteren Parametern derart steuerbar bzw. regelbar ist, daß - bei angenähert schräglauffreier Fahrt - ein äußerer Eckbereich bzw. Punkt (P) am Fahrzeugheck angenähert die gleiche Bahnkurve (Q) durchläuft wie ein analoger äußerer Eckbereich bzw. Punkt (O) am Fahrzeugbug,
   **dadurch gekennzeichnet,**
   daß zumindest in einem unteren Bereich der Fahrgeschwindigkeit die Hinterradlenkwinkel auf einen Stellbereich begrenzt sind, dessen Grenzen sich in Abhängigkeit vom Vorderradlenkwinkel ändern, derart, daß mit zunehmender Abweichung des Vorderradlenkwinkels von der Geradeausstellung ein zunehmender Stellbereich der Hinterradlenkwinkel beiderseits der Geradeausstellung und bei Geradeausstellung der Vorderräder nur eine Geradeausstellung der Hinterräder ermöglicht werden.

2. Fahrzeug nach Anspruch 1,
   **dadurch gekennzeichnet,**
   daß innerhalb eines Übergangsbereiches der Fahrgeschwindigkeit - oberhalb eines den Bereich der langsamen Vorwärtsfahrt nach oben begrenzenden ersten Schwellwertes ($v_1$) und unterhalb eines einen Bereich schnellerer bzw. schneller Vorwärtsfahrt nach unten begrenzenden zweiten Schwellwertes ($v_2$) - anstelle des bei langsamer Vorwärtsfahrt einzustellenden mittleren Hinterradlenkwinkels ($\delta_{HS1}$) ein demgegenüber um einen Faktor ($k_{1(v)}$)verkleinerter mittlerer Hinterradlenkwinkel ($\delta_{HS2}$) eingestellt wird, wobei der Faktor mit zunehmender Geschwindigkeit (v) abnimmt sowie am ersten Schwellwert ($v_1$) den Wert 1 und am zweiten - größeren - Schwellwert ($v_2$) den Wert 0 hat.

3. Fahrzeug nach Anspruch 1 oder 2,
   **dadurch gekennzeichnet,**
   daß die Hinterräder bei Rückwärtsfahrt in von der Vorwärtsfahrt abweichender Weise - z.B. ständig in Geradeausstellung bleiben oder ausschließlich gegenläufig zu den Vorderrädern gelenkt werden - gesteuert werden, und daß bei Fahrtrichtungswechsel von Rückwärts- auf Vorwärtsfahrt die für Rückwärtsfahrt zuletzt verwendete Art der Hinterradsteuerung zunächst auch bei Vorwärtsfahrt so lange beibehalten bleibt, bis die Vorderräder erstmals in Geradeausstellung gebracht worden sind.

4. Fahrzeug nach einem der Ansprüche 1 bis 3,
   **dadurch gekennzeichnet,**
   daß - zumindest in einem unteren Bereich der Fahrgeschwindigkeit - zeitlich vor einer Geradeausstellung liegende Vorderradlenkwinkel für die Einstellung der Hinterräder unberücksichtigt bleiben.

5. Fahrzeug nach einem der Ansprüche 1 bis 4,
   **dadurch gekennzeichnet,**
   daß bei einem Start des Fahrzeuges nach einer Stillstandsphase bei auf den Stillstand folgender Vorwärtsfahrt die Hinterräder zunächst so gesteuert werden, daß der äußere Eckbereich bzw. Punkt (P) am Fahrzeugheck auf annähernd geradliniger Bahn bis zu der Position geführt wird, die im Stillstand von dem analogen Eckbereich bzw. Punkt (O) am Fahrzeugbug eingenommen wurde.

**Claims**

1. A non-railborne vehicle (1) with randomly steerable front wheels (2) and additional rear wheel steering which either operates automatically or can be switched to automatic operation with which the steering angle of the rear wheels (3) can be controlled or regulated in accordance with the steering angle of the front wheels and with other parameters in such way that - when the vehicle is travelling with almost no slip - an outer corner or point (P) at the rear of the vehicle describes almost the same leg of trajectory (Q) as a corresponding outer corner or point (O) at the front end of the vehicle,

**characterised in that,**

in a lower road speed range at least, the steering angle of the rear wheels is limited to a regulating range, the limits of which vary according to the steering angle of the front wheels in such a way that the more the steering angle of the front wheels deviates from straight ahead, the greater the possible regulating range of the rear wheel steering angle to both sides of the straight ahead position, and when the front wheels are in the straight ahead position the rear wheels must also be in the straight ahead position.

2. A vehicle in accordance with Claim 1,

   **characterised in that,**

   within a road speed transition range - above a first threshold value ($v_1$) limiting the upper range of slow forward travel and below a second threshold value ($v_2$) limiting the lower range of faster or fast forward travel - instead of the mean rear wheel steering angle ($\delta_{HS1}$) to be set during slow forward travel, a mean rear wheel steering angle ($\delta_{HS2}$) smaller than this latter by a factor of ($k_{1(v)}$) is set, whereby the factor decreases as velocity ($v$) increases and at the first threshold value ($v_1$) the value is 1 and at the second - greater - threshold value ($v_2$) the value is 0.

3. A vehicle in accordance with Claim 1 or 2,

   **characterised in that,**

   during rearward travel, unlike forward travel, the rear wheels are controlled - e.g. constantly in a the straight ahead position or steered exclusively in the opposite direction to the front wheels - and that when the direction of travel changes from rearward travel to forward travel the type of rear wheel control last used for rearward travel is maintained during forward travel until the front wheels are brought into the straight ahead position.

4. A vehicle in accordance with one of Claims 1 to 3,

   **characterised in that,**

   - at least in a lower road speed range - front wheel steering angles prior to the straight ahead position are not taken into account when setting the rear wheels.

5. A vehicle in accordance with one of Claims 1 to 4,

   **characterised in that,**

   when the vehicle is started after a period of standstill, if the standstill is followed by forward travel, the rear wheels are first controlled in such a manner that the outer corner or point (P) at the rear of the vehicle is guided along an almost straight path to the position taken up by the corresponding corner or point (O) at the front end of the vehicle.

**Revendications**

1. Véhicule (1) non guidé, possédant des roues avant (2) orientable à volonté et une direction arrière additionnelle, fonctionnant automatiquement ou commutable sur fonctionnement automatique, par laquelle l'angle de braquage des roues arrière (3) peut être commandé ou réglé, en fonction de l'angle de braquage des roues avant ainsi que d'autres paramètres, de manière qu'une zone extérieure d'angle ou un point extérieur (P) à l'arrière du véhicule - roulant à peu près sans aller en biais - parcourt approximativement la même trajectoire courbe (Q) qu'une zone extérieure d'angle ou un point extérieur (O) analogue à l'avant du véhicule, caractérisé en ce que, tout au moins dans une zone inférieure de la vitesse de marche, les angles de braquage des roues arrière sont limités à une plage de réglage dont les limites changent en fonction de l'angle de braquage des roues avant, de telle sorte qu'à mesure que l'angle de braquage des roues avant s'écarte davantage de la position de ligne droite, une plage croissante de réglage des angles de braquage des roues arrière soit rendue possible des deux côtés de la position de ligne droite et que, lorsque les roues avant sont en position de ligne droite, seulement une position de ligne droite des roues arrière soit rendue possible.

2. Véhicule selon la revendication 1, caractérisé en ce que, à l'intérieur d'une zone de transition de la vitesse de marche - au-dessus d'un premier seuil ($v_1$) limitant vers le haut la zone de la marche avant lente et au-dessous d'un second seuil ($v_2$) limitant vers le bas une zone de marche avant plus rapide ou rapide -, à la place d'un angle moyen de braquage des roues arrière ($\delta_{HS1}$) à établir pour une marche avant lente, un angle moyen de braquage des roues arrière ($\delta_{HS2}$) réduit d'un facteur ($k_{1(v)}$) par rapport audit angle de braquage est établi, ledit facteur diminuant à mesure que la vitesse ($v$) augmente et possédant la valeur 1 au premier seuil ($v_1$) et la valeur 0 au second seuil ($v_2$) qui est plus élevé que le premier.

3. Véhicule selon la revendication 1 ou 2, caractérisé en ce que, en marche arrière, les roues arrière sont commandées, quant à leur orientation, d'une manière qui diffère de leur orientation en marche avant - par exemple en restant en permanence en position de ligne droite ou en étant braquées exclusivement en sens contraire aux roues avant -, et que, en cas de changement du sens de marche pour passer de la marche arrière à la marche avant, le mode d'orientation des roues arrière utilisé en dernier pour la marche arrière est initialement conservé aussi pour la marche avant, jusqu'à ce que les roues avant aient été amenées une première fois à la position de ligne droite.

4. Véhicule selon l'une des revendications 1 à 3, caractérisé en ce que - tout au moins dans une plage inférieure de la vitesse de marche - des angles de braquage des roues avant précédant, dans le temps, une position de ligne droite, n'entrent pas en ligne de compte pour l'orientation des roues arrière.

5. Véhicule selon l'une des revendications 1 à 4, caractérisé en ce que, dans le cas d'un départ du véhicule à la suite d'une phase d'arrêt et à condition que le déplacement faisant suite à l'arrêt s'effectue en marche avant, les roues arrière sont initialement orientées de manière que la zone extérieure d'angle ou le point extérieur (P) à l'arrière du véhicule soit amené, suivant une trajectoire approximativement rectiligne, à la position occupée, à l'arrêt, par la zone d'angle ou le point (O) analogue à l'avant du véhicule.

Fig. 1

Fig. 2

EP 0 545 054 B1